# EUROPEAN PATENT APPLICATION

(11) **EP 2 626 618 A1**
(43) Date of publication of application: **14.08.2013**
(21) Application number: 11819148.5
(22) Date of filing: 29.08.2011
(51) Int. Cl.: F21S 2/00, F21V 9/08

(54) **SIMULATED SUNLIGHT LIGHT IRRADIATION DEVICE AND INSPECTION DEVICE FOR SOLAR CELL PANEL**

(30) Priority: 08.10.2010 JP 2010229123
(71) Applicant: Sharp Kabushiki Kaisha, Osaka-shi Osaka 545-8522 (JP)
(72) Inventor: NAKAMURA, Atsushi, Osaka-shi Osaka 545-8522 (JP)
(74) Representative: Müller - Hoffmann & Partner
(86) International application number: PCT/JP2011/004806
(87) International publication number: WO 2012/046378

(57) **Abstract**

Precise, uniform illuminance is obtained for an irradiation surface without adjustment time of illuminance of the irradiation surface being time-intensive, even for an expansive area. At least one light source (xenon light source 2 or halogen light source 7, or the like) and an optical filter (air mass filter 5, 10, or the like) functioning as an optical element are matched with a respective light guiding member 14 or 14A. Since an irradiation region of the light guiding member 14 or 14A for surface irradiation is directly matched with a respective part of the irradiation surface (small irradiation surface) of an irradiation subject, illuminance on part of the irradiation surface (small irradiation surface) of the irradiation subject can be adjusted with precision by changing the amount of light entering the inside of the light guiding member **14** or **14A** for surface irradiation.

## Description

### TECHNICAL FIELD

The present invention relates to a pseudo-sunlight irradiation apparatus for emitting pseudo-sunlight with high directivity onto an irradiation subject, and a solar panel inspection apparatus for measuring an output characteristic of a solar panel to determine quality, using the pseudo-sunlight irradiation apparatus.

### BACKGROUND ART

In a conventional pseudo-sunlight irradiation apparatus functioning as a light source apparatus for reproducing the spectral distribution of sunlight with high precision, an attempt has been conventionally made to unify the illuminance distribution on a measurement subject by lighting a xenon lamp to let pseudo-sunlight passing through an optical filter (air mass filter) undergo diffuse reflection with a reflection plate to obtain light having a desired spectrum.

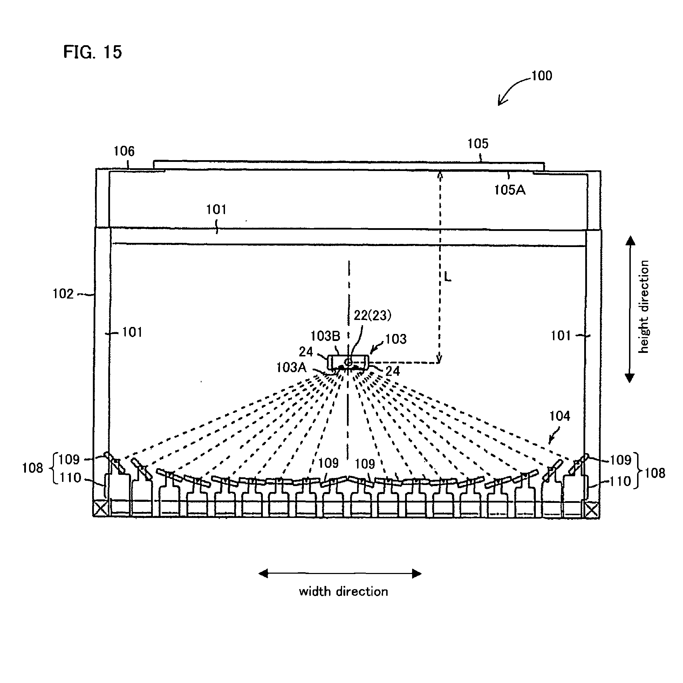

Figure **15** is a longitudinal cross-sectional view schematically illustrating a structural example of an important part of a conventional pseudo-sunlight irradiation apparatus disclosed in Patent Literature 1.

In Figure **15**, a conventional pseudo-sunlight irradiation apparatus **100** has a grid-like frame body **102** configured by piecing together a plurality of frames **101** having a rectangular pillar shape. At the center section of the frame body **102**, a pseudo-sunlight irradiation box **103** is provided for radiating pseudo-sunlight. The conventional pseudo sunlight irradiation apparatus **100** comprises a reflection surface **104** positioned opposing the bottom surface **103A** of the pseudo-sunlight irradiation box **103**, and an irradiation subject **105** having a planar irradiation surface, such as a solar panel, positioned opposing the top surface **103B** of the pseudo-sunlight irradiation box **103**. Each of the four sides of the frame body **102** is covered by a light shielding plate. The irradiation surface **105A** is disposed at a position spaced only by a predetermined distance L from the pseudo-sunlight irradiation box **103** by placing the irradiation subject **105** on a sample support frame **106** fixed onto the frame body **102**.

A light source lamp **107** is provided in the pseudo-sunlight irradiation box **103**. Pseudo-sunlight from the light source lamp **107** comprises direct light reaching directly to the irradiation subject **105** via the top surface **103B** of the pseudo-sunlight irradiation box **103**; and reflection light indirectly reaching the irradiation subject **105** reflected by the reflection surface **104** via the bottom surface **103A** of the pseudo-sunlight irradiation box **103** from the light source lamp **107**.

The reflection surface **104** is constituted of a plurality of reflection apparatuses **108**. The reflection apparatus **108** has a mirror **109**, which is a reflection mirror, and a support member **110** for supporting each mirror **109** so as to freely enable tilting movement thereof. Irradiation of the irradiation surface **105A** is performed by direct light reaching the irradiation surface **105A** from the light source lamp **107** and light radiated to the opposite side of the irradiation surface **105A** reflected by a plurality of mirrors **109**. Adjustment of amount of light to make illuminance on the irradiation surface **105A** uniform is performed with the light reflected by the plurality of mirrors **109**. Specifically, adjustment of the illuminance distribution on the irradiation surface **105A** is performed by adjusting the angle of the mirrors **109**.

### [Citation List]

### [Patent Literature]

Reference 1: Japanese Laid-Open Publication No. 2009-145254

### SUMMARY OF INVENTION

### [Technical Problem]

In the conventional configuration disclosed in Patent Literature 1, since a plurality of mirrors **109** are used to guide the diffused light from the light source lamp **107** to the irradiation surface **105A**, it is necessary to adjust all of the mirrors **109** to maintain the uniformity of illuminance. This not only requires a lot of adjustment time, but it is also difficult to reliably obtain precise uniformity of illuminance. Also, since more mirrors are required to irradiate an expansive area using the plurality of mirrors **109**, it is difficult to adapt to expansion of a module size.

The present invention is intended to solve the conventional problems described above. An objective of the present invention is to provide: a pseudo-sunlight irradiation apparatus capable of obtaining precise, uniform illuminance with respect to an irradiation surface without time-consuming adjustment the illuminance of the irradiation surface, even for an expansive irradiation surface; and a solar panel inspection apparatus for measuring an output characteristic of a solar panel to determine quality, using the pseudo-sunlight irradiation apparatus.

### [Solution to Problem]

A pseudo-sunlight irradiation apparatus according to the present invention is provided, where a plurality of optical systems are disposed, each optical system comprising: at least one light source each having a different light emission wavelength range, an optical element providing a predetermined spectral distribution to output light from each of the at least one light source, and a light guiding member for propagating output light obtained through the optical element to emit light as area irradiation onto a part of an irradiation subject, where the at least one light source and the optical element are matched with a respective light guiding member, the amount of light entering the light guiding member is adjustable individually for each of the optical systems by adjusting at least either the at least one light source or the optical element, and light is irradiated on the whole irradiation surface of the irradiation subject by the light guiding members of the plurality of optical systems, thereby achieving the objective described above.

Preferably, in a pseudo-sunlight irradiation apparatus according to the present invention, each optical system comprises: a light irradiation apparatus having a first light source, and an optical filter functioning as the optical element for adjusting a spectrum of light output from the first light source; and a light guiding member for surface irradiation, for taking pseudo-sunlight similar to sunlight from the light irradiation apparatus into one end surface and propagating the light through the inside thereof, to emit the light as area irradiation uniformly onto an irradiation subject from a flat surface.

Still preferably, in a pseudo-sunlight irradiation apparatus according to the present invention, each optical system comprises: a light irradiation apparatus comprising: a first light source; a light guiding member for taking output light from the first light source into one end surface and outputting light with improved directivity from the other end surface thereof; and an optical filter for adjusting a spectrum of light output from the other end surface of the light guiding member; and a light guiding member for surface irradiation, for taking pseudo-sunlight similar to sunlight from the light irradiation apparatus into one end surface and propagating the light inside thereof, to emit the light with improved directivity as area irradiation uniformly onto an irradiation subject from a flat surface.

Still preferably, in a pseudo-sunlight irradiation apparatus according to the present invention, a unit is constituted of the optical system comprising the light irradiation apparatus and the light guiding member for surface irradiation, the units are placed facing each other in the left and right direction, and a plurality of two units, having the other end surfaces of the respective light guiding members for surface irradiation touch each other, are placed in an array in the forward and backward direction in accordance with the size of the irradiation subject.

Still preferably, in a pseudo-sunlight irradiation apparatus according to the present invention, the light irradiation apparatuses are placed on the left and right, a light guiding member for surface irradiation is provided for taking light from the optical filter on the left side into one end surface and allowing the light to propagate through the inside thereof, and for taking light from the optical filter on the right side into the other end surface and allowing the light to propagate through the inside thereof, to emit light with high directivity uniformly as area irradiation onto an irradiation subject from a flat surface, a unit is constituted of the light guiding member, and a plurality of the units are provided in an array in the forward and backward direction in accordance with the size of an irradiation target.

Still preferably, in pseudo-sunlight irradiation apparatus according to the present invention, each optical system comprises: a first light irradiation apparatus comprising: a first light source; and a first optical filter functioning as the optical element, for adjusting a spectrum of the light output from the first light source; a second light irradiation apparatus comprising: a second light source; and a second optical filter, functioning as the optical element, for adjusting a spectrum of the light output from the second light source; and a third light irradiation apparatus comprising: a light mixing member for mixing light from the first light irradiation apparatus and light from the second light irradiation apparatus to obtain pseudo-sunlight similar to sunlight; and a third light guiding member for taking the pseudo-sunlight from the light mixing member, into one end surface, allowing the pseudo-sunlight to propagate the inside thereof and emitting light with high directivity onto an irradiation subject from a flat surface thereof uniformly as area irradiation.

Still preferably, in a pseudo-sunlight irradiation apparatus according to the present invention, each optical system comprises: a first light irradiation apparatus comprising: a first light source; a first light guiding member for taking output light from the first light source into one end surface and outputting the light with increased directivity from another end surface; and a first optical filter for adjusting a spectrum of the light output from the other end surface of the first light guiding member; a second light irradiation apparatus comprising: a second light source; a second light guiding member for taking output light from the second light source into one end surface and outputting the light with increased directivity from the other end surface; and a second optical filter for adjusting a spectrum of the light output from the other end surface of the second light guiding member; and a third light irradiation apparatus comprising: a light mixing member for mixing light from the first light irradiation apparatus and light from the second light irradiation apparatus to obtain pseudo-sunlight similar to sunlight; and a third light guiding member for taking the pseudo-sunlight from the light mixing member, into one end surface, allowing the pseudo-sunlight to propagate the inside thereof and emitting light with high directivity onto an irradiation subject from a flat surface thereof uniformly as area irradiation.

Still preferably, in a pseudo-sunlight irradiation apparatus according to the present invention, a unit is constituted of the optical system comprising the first light irradiation apparatus, the second light irradiation apparatus, and the third light irradiation apparatus; and a plurality of groups of two units are placed in an array in the forward and backward direction in accordance with the size of the irradiation subject, the units of each of said groups placed facing each other in the left and right direction and having the other end surfaces of the respective third light guiding members of the third light irradiation apparatus touching each other.

Still preferably, in a pseudo-sunlight irradiation apparatus according to the present invention, in between a left-side set with a first light irradiation apparatus, a second light irradiation apparatus and the light mixing section arranged therein; and a right-side set with the first light irradiation apparatus, the second light irradiation apparatus and the light mixing section arranged therein, a fourth light guiding member is provided, for taking mixed light from the light mixing section on the left side into one end surface and allowing the light to propagate through the inside thereof, and for taking mixed light from the light mixing section on the right side into the other end surface and allowing the light to propagate through the inside thereof, to emit light with high directivity uniformly as area irradiation onto an irradiation subject from a flat surface in accordance with the size of an irradiation subject.

Still preferably, in a pseudo-sunlight irradiation apparatus according to the present invention, in between a left-side set with a first light irradiation apparatus, a second light irradiation apparatus and the light mixing section arranged therein; and a right-side set with the first light irradiation apparatus, the second light irradiation apparatus and the light mixing section arranged therein, a fourth light guiding member is provided in place of the third light irradiation apparatus, for taking mixed light from the light mixing section on the left side into one end surface and allowing the light to propagate through the inside thereof, and for taking mixed light from the light mixing section on the right side into the other end surface and allowing the light to propagate through the inside thereof, to emit light with high directivity uniformly as area irradiation onto an irradiation subject from a flat surface in accordance with the size of an irradiation subject.

A solar panel inspection apparatus according to the present invention for measuring an output characteristic of a solar panel to determine quality uses the pseudo-sunlight irradiation apparatus according to the present invention, thereby achieving the objective described above.

Hereinafter, functions of the present invention in the configuration described above will be described.

In the present invention, a plurality of optical systems are disposed, which each comprise at least one light source with different light emission wavelength ranges; an optical element providing a predetermined spectral distribution to output light from the at least one light source; and a light guiding member for propagating output light obtained through the optical element to irradiate a part of a surface of an irradiation subject. Also, at least one light source and the optical element is matched with a respective light guiding member. Further, the amount of light entering the light guiding member can be adjusted for each optical system by adjusting at least either the at least one light source or the optical element. Thereby, light is irradiated on the whole irradiation surface of the irradiation subject by a plurality of light guiding members of the optical system.

Since at least one light source and the optical filter functioning as an optical element are matched with the respective light guiding member for surface irradiation and an irradiation region of the light guiding member for surface irradiation is directly matched with a respective part of the irradiation surface of the irradiation subject, illuminance on part of the irradiation surface can be adjusted more precisely compared to other parts of the irradiation surface among irradiation surfaces of the irradiation subject by changing the amount of light entering the inside of the light guiding member for surface irradiation. Thereby, uniform illuminance for the whole irradiation surface is easily obtained. Specifically, precise adjustment of illuminance on part of the irradiation surface of the irradiation subject is performed and uniform illuminance on the whole irradiation surface is easily obtained by adjusting the output for each lamp functioning as a light source and by replacing optical air filters with those having different light transmittance functioning as an optical filter. Additionally, a decrease in illuminance at both ends of an irradiation region of the irradiation surface of the irradiation subject can be easily adjusted and prevented by increasing the light source output corresponding to the light guiding member for surface irradiation at both edges in the forward and backward directions. Thus, even when the irradiation surface of the irradiation subject is expansive, precise uniform illuminance can be quickly obtained for the irradiation surface of the irradiation subject without requiring time for adjusting illuminance of the irradiation surface of the irradiation subject, as in a conventional manner.

### [Advantageous Effects of Invention]

According to the present invention described above, since at least one light source and the optical filter functioning as an optical element are matched with a respective light guiding member for surface irradiation; and since an irradiation region of the light guiding member for surface irradiation is directly matched to a respective part of the irradiation surface of the irradiation subject, precise uniform illuminance can be quickly obtained for the irradiation surface of the irradiation subject without requiring time for adjusting illuminance of the irradiation surface of an irradiation subject as in a conventional manner, even when the irradiation surface of the irradiation subject is expansive, by changing the amount of light entering the inside of the light guiding member for surface irradiation.

### BRIEF DESCRIPTION OF THE DRAWINGS

Figure **1** is a perspective view schematically illustrating a structural example of an important part of a pseudo-sunlight irradiation apparatus according to Embodiment 1 of the present invention.
Figure **2** is a longitudinal cross sectional view schematically illustrating a structural example of an important part of a pseudo-sunlight irradiation apparatus in Figure **1**.
Figures **3(a)** and **3(b)** are each a perspective view for further describing the adjustment of the amount of light of a pseudo-sunlight irradiation apparatus according to Embodiment 1.
Figure **4** is a plane view of a pseudo-sunlight irradiation apparatus in Figure **1**.
Figure **5** is a perspective view illustrating a xenon light source, a reflector housing the xenon light source, and an aperture plate in the front in Figure **1**.
Figure **6(a)** is a longitudinal cross-sectional view of a xenon light source, a reflector, an aperture plate, and a tapered light guiding member in Figure **1**. Figure **6(b)** is a plane view illustrating an aperture section of an aperture plate in Figure **5**.
Figure **7** is a cross sectional view schematically illustrating a first structure of a tapered light guiding member for preventing stray light from entering an adjacent tapered light guiding member.
Figure **8** is a perspective view schematically illustrating an external appearance of a first structure of a tapered light guiding member in Figure **7**.
Figure **9(a)** is a chart illustrating illuminance with respect to wavelength of a xenon lamp. Figure **9(b)** is a chart illustrating illuminance with respect to wavelength of a halogen lamp.
Figure **10** is a perspective view schematically illustrating a structural example of an important part of a pseudo-sunlight irradiation apparatus according to Embodiment 2 of the present invention.
Figure **11** is a longitudinal cross sectional view schematically illustrating a structural example of an important part of a pseudo-sunlight irradiation apparatus in Figure **10**.
Figures **12 (a)** and **12 (b)** are each a perspective view for further describing the adjustment of the amount of light of a pseudo-sunlight irradiation apparatus according to Embodiment 2.
Figure **13** is a plane view of a pseudo-sunlight irradiation apparatus in Figure **10**.
Figure **14** is a longitudinal cross sectional view schematically illustrating an example of a variation of a structural example of an important part of a pseudo-sunlight irradiation apparatus in Figure **1**.
Figure **15** is a longitudinal cross-sectional view schematically illustrating a structural example of an important part of a conventional pseudo-sunlight irradiation apparatus disclosed in Patent Literature 1.

### [Reference Signs List]

**1, 1A** pseudo-sunlight irradiation apparatus
**2** xenon light source
**3a** reflector
**3b** aperture plate
**31** aperture section
**32** light shielding member
**4** tapered light guiding member
**41, 91** light shielding member
**42, 92** light shielding member
**5** air mass filter (first optical filter; spectral adjusting filter)
**6** first light irradiation apparatus
**7, 7A, 2C, 2D** halogen light source
**8, 8A, 3C, 3D** reflector
**9, 9C, 9D** tapered light guiding member
**93** light shielding member (light shielding plate)
**10, 10C, 10D** air mass filter (second optical filter; spectral adjusting filter)
**11** second light irradiation apparatus
**12** light mixing section (wavelength selecting mirror)
**13** irradiation subject (solar panel)
**14, 14A** light guiding member
**15** third light irradiation apparatus
**15A** fourth light irradiation apparatus
**L1, L2** stray light

### BEST MODE FOR CARRYING OUT THE INVENTION

The present invention according to Embodiments 1 and 2 will be described in detail as follows, with reference to the drawings: a pseudo-sunlight irradiation apparatus; and a case where the pseudo-sunlight irradiation apparatus is applied to a solar panel inspection apparatus. With respect to the prepared figures, thicknesses, lengths or the like of each element in each figure are not limited to the configuration shown in the figure.

### (Embodiment 1)

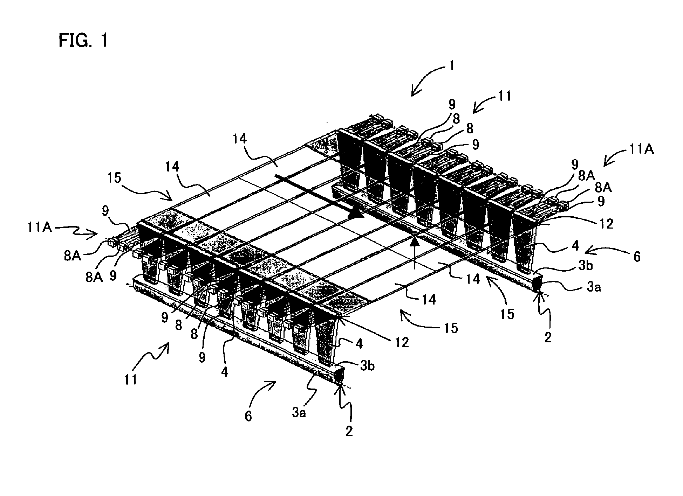

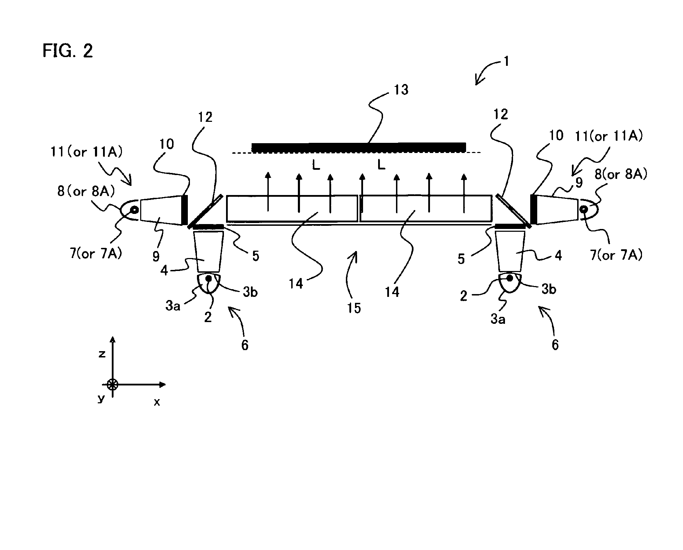

Figure **1** is a perspective view schematically illustrating a structural example of an important part of a pseudo-sunlight irradiation apparatus according to Embodiment 1 of the present invention. Figure **2** is a longitudinal cross sectional view schematically illustrating a structural example of an important part of the pseudo-sunlight irradiation apparatus in Figure **1**.

In Figures **1** and **2**, a pseudo-sunlight irradiation apparatus **1** according to Embodiment 1 is equipped with a first light irradiation apparatus **6**. The first light irradiation apparatus **6** comprises: a xenon light source **2** of a xenon lamp; a reflector **3a** for housing the xenon light source **2** therein, with an inner surface functioning as a reflection surface; an aperture plate **3b** for covering a front portion of the reflector **3a**; a tapered light guiding member **4** functioning as a tapered coupler for taking in a xenon output light from a bottom end surface thereof and propagating the light through the inside to improve the directivity of the light, where the xenon output light comes from an aperture section (not shown) of the aperture plate **3b**; and an air mass filter **5** functioning as a first optical filter (spectral adjusting filter) for filtering the xenon light from the tapered light guiding member **4** to form a spectrum of pseudo-sunlight closer to the shorter wavelength side of the spectrum. As such, in the first light irradiation apparatus **6**, an output light from the xenon light source **2** is reflected and gathered by the reflector **3a**. The xenon output light is then output from the aperture section of the aperture plate **3b**, and the xenon output light is taken into the bottom end surface of the tapered light guiding member **4**, referred to as a tapered coupler. The xenon output light is allowed to propagate through the inside to form parallel light with high directivity, and the xenon light with high directivity is output from the top end surface of the tapered light guiding member **4** through the air mass filter **5.** The xenon light from the air mass filter **5** corresponds to a spectrum of pseudo-sunlight closer to the shorter wavelength side of the spectrum.

The pseudo-sunlight irradiation apparatus **1** is also equipped with a second light irradiation apparatus **11**. The second light irradiation apparatus **11** comprises: a halogen light source **7** such as a halogen lamp; a reflector **8** for housing the halogen light source **7**, with an inner surface functioning as a reflection surface; a tapered light guiding member **9** for taking in halogen output light reflected by the inner surface of the reflector **8**, from the bottom end surface of the tapered light guiding member **9** and propagating the light through the inside to improve the directivity of the light; and an air mass filter **10** functioning as a second optical filter (spectral adjusting filter) for filtering the halogen output light from an end surface of the tapered light guiding member **9** to form a spectrum of pseudo-sunlight closer to the longer wavelength side of the spectrum. As such, in the second light irradiation apparatus **11**, the output light of the halogen light source **7** is reflected and gathered by the reflector **8**. The halogen output light is taken into one end surface of the tapered light guiding member **9** referred to as a tapered coupler, and the light is allowed to propagate through the inside to form parallel light with high directivity. Then the halogen output light with high directivity is output from the other end surface of the tapered light guiding member **9** through the air mass filter **10** to adjust a spectrum. The halogen light from the air mass filter **10** corresponds to a spectrum of pseudo-sunlight closer to the longer wavelength side of the spectrum. The halogen light source **7** may be a one-filament type halogen lamp; however, a two-filament type halogen lamp is used for the halogen light source **7** herein to gain more power, and the tapered light guiding member **9** is used in conjunction with two halogen lamps.

The pseudo-sunlight irradiation apparatus **1** is further equipped with a third light irradiation apparatus **15**. The third light irradiation apparatus **15** comprises: a light mixing section **12**, such as a wavelength selecting mirror (or a wavelength mixing mirror), functioning as reflection and transmission means for reflecting xenon output light of shorter wavelength from the air mass filter **5** to adjust a spectrum of the first light irradiation apparatus **6**, and transmitting halogen output light of longer wavelength from the air mass filter **10** to adjust a spectrum of the second light irradiation apparatus **11**, to mix the light and obtain pseudo-sunlight which is similar to sunlight; and a light guiding member **14** for taking in pseudo-sunlight, which is diffused light from the light mixing section **12**, from one end surface and propagating the light through the inside to emit light **L** with high directivity uniformly as area irradiation onto an irradiation subject **13** such as a solar panel. Further, as illustrated in Figure **2**, the third light irradiation apparatus **15** is placed on either side, and the respective light guiding members **14** touch each other at respective end surfaces thereof.

Adjustment of the amount of light will now be further described.

The xenon light source **2** and the halogen light source **7** are matched with the respective light guiding member **14**. Then, the amount of light output from the xenon light source **2** and the halogen light source **7** can be controlled to control the amount of light output from the light guiding member **14** individually with precision by replacing the lamps of the xenon light source **2** and the halogen light source **7** or adjusting the current flowing in the lamp. Similarly, the air mass filter **5** and the air mass filter **10** are matched with the respective light guiding member **14**. Then, the amount of light output from the light guiding member **14** can be controlled individually with precision by replacing the air mass filter **5** and the air mass filter **10** with an air mass filter having a different light transmittance to control the amount of light allowed to enter each light guiding plate **14**.

The xenon light source **2** and the halogen light source **7** are matched with the respective light guiding member **14**, and the air mass filter **5** and the air mass filter **10** are matched with the respective light guiding member **14**. Thus, precise adjustment of illuminance is made possible for the irradiation surface of the irradiation subject **13**, without needing time to adjust the irradiation of the irradiation surface in comparison to the conventional configuration where output light from the lamp light source is adjusted with numerous mirrors to adjust the illuminance irradiating the irradiation subject uniformly on the whole surface. Thus, uniform illuminance can be obtained for the irradiation surface of the irradiation subject **13**.

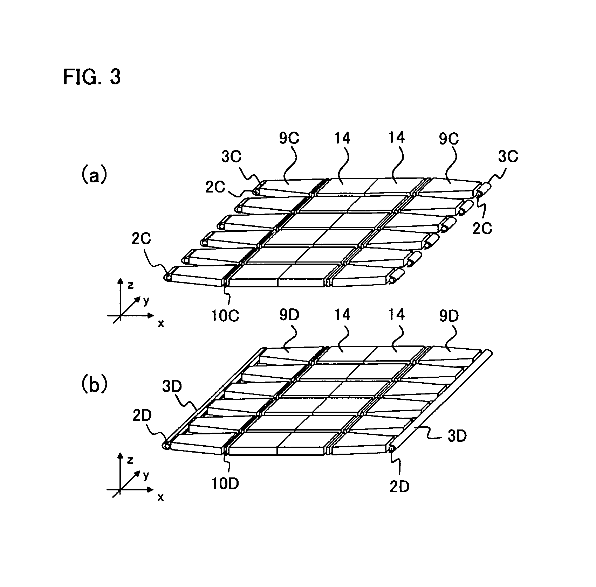

Next, adjustment of the amount of light can be further simplified when: either the first light irradiation apparatus **6**, the second light irradiation apparatus **11**, or another light irradiation apparatus is used to match the lamp light source with the respective light guiding member **14**; and the air mass filter is matched with the respective light guiding member **14**, since there is only one light irradiation apparatus. This is illustrated in Figures **3(a)** and **3(b)**.

Figures **3(a)** and **3(b)** are each a perspective view for further describing the adjustment of the amount of light of the pseudo-sunlight irradiation apparatus **1** according to Embodiment 1. In Figures **3(a)** and **3(b)**, the first light irradiation apparatus **6** and the light mixing section **12** (wavelength selecting mirror) in Figure **1** are not shown.
The first light irradiation apparatus **6** and the light mixing section **12** (wavelength selecting mirror) are not necessary in the description using Figures **3(a)** and **3(b)** regarding only the adjustment of the amount of light.

As illustrated in Figure **3(a)**, the amount of light output from a light source lamp **2C** can be controlled individually by: matching each light guiding plate **14** with the respective light source lamp **2C**; replacing the lamp; or adjusting the current. In this case, amount of light allowed to enter each light guiding plate **14** can be adjusted by replacing an air mass filter **10C** (spectrum adjusting filter) with one having different light transmittance.

Also, as illustrated in Figure **3(b)**, for each light guiding plate **14**, a light source lamp may be of a non-divided batch irradiation type such as light source lamp **2D**, and each light guiding plate **14** is matched with a respective air mass filter **10D**. Then, transmittance for each filter may be controlled individually by replacing only the air mass filter **10D** (spectrum adjusting filter). Alternatively, the amount of light allowed to enter the light guiding plate **14** can be restricted and adjusted by adding a light transmittance filter aside from the air mass filter **10D** (spectrum adjusting filter), as a correction filter for controlling transmittance.

In addition, as a detailed example of adjustment of the amount of light, a case is further described where the amount of light towards both edges is increased to unify the amount of irradiation light on a whole irradiation surface. This can be applied in the case of Figures **3(a)** and **3(b)** where either one of the first light irradiation apparatus **6** and the second light irradiation apparatus **11** is used, or another light irradiation apparatus is used. However, a case of the pseudo-sunlight irradiation apparatus **1** in Figure **1** is described herein.

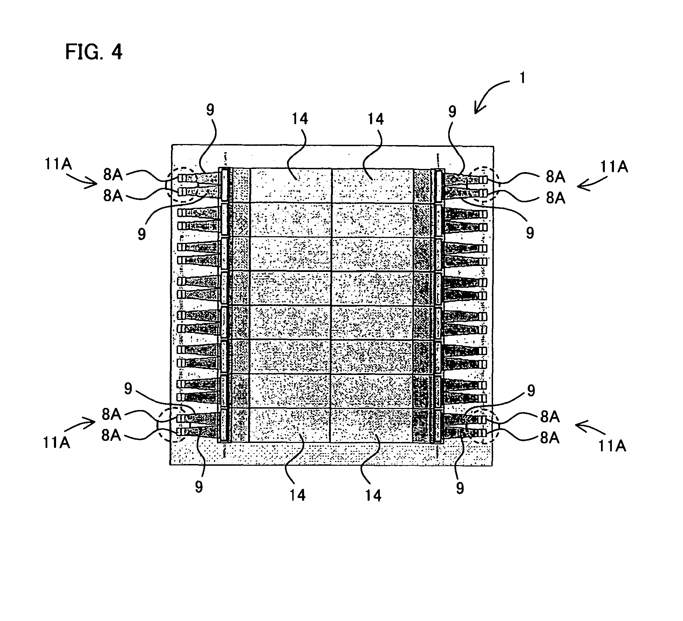

Figure **4** is a plane view of the pseudo-sunlight irradiation apparatus **1** in Figure **1**.

A unit is formed of a group constituted of the first light irradiation apparatus **6**, the second light irradiation apparatus **11**, and the third light irradiation apparatus **15**, and two groups are provided on the left and right. Eight sets of two groups are provided in the forward and backward direction. Since there tends to be less irradiation light at either edge in the forward and backward direction (nearest side and the furthest side), as illustrated in the plane view in Figure **4**, the amount of irradiation light at the area closer to either edge is increased compared to the amount of irradiation light at the center section, which is the section other than the area closer to the edge, so as to unify the amount of irradiation light on the irradiation subject **13**. Herein, the amount of xenon light and halogen light are both increased at the area closer to the edges, but only halogen light is described. Both areas closer to the edges in the forward and backward direction are designed to enable the use of a halogen light source **7A** having a slightly larger output compared to the halogen light source **7**.

The pseudo-sunlight irradiation apparatus **1** is equipped with a second light irradiation apparatus **11A**. The second light irradiation apparatus **11A** comprises: a halogen light source **7A** having a higher amount of light output than the halogen light source **7**; a reflector **8A** for housing the halogen light source **7A**, with an inner surface functioning as a reflection surface; a tapered light guiding member **9** for taking in halogen output light reflected by the inner surface of the reflector **8A**, from one end surface of the tapered light guiding member **9** and propagating the light through the inside to improve the directivity of the light; and an air mass filter **10** functioning as a second optical filter for filtering the halogen output light from the other end surface of the tapered light guiding member **9** to form a spectrum of pseudo-sunlight closer to the longer wavelength side of the spectrum. In this case, the reflector **8A**, the tapered light guiding member **9**, and the air mass filter **10** are to be compatible with the amount of light output of the halogen light source **7A**. If the reflector **8** is compatible with the amount of light output, the reflector **8** may be the same as reflector **8A**.

In addition, in the pseudo-sunlight irradiation apparatus **1** according to Embodiment 1, a group constituted of the first light irradiation apparatus **6**, the second light irradiation apparatus **11**, and the third light irradiation apparatus **15** is unitized, and two groups are disposed on the left and right. Then, eight such sets (two units disposed on the left and right constitute a set, sixteen units in total) are provided in an array in the forward and backward direction. The unit can comprise at least a replaceable lamp with a different output light amount or a replaceable air mass filter **5** (spectral adjusting filter) with a different light transmittance, so that irradiation intensity (light amount) of light entering the light guiding plate **14** can be individually adjusted. By providing an attachment section for either the halogen light source **7** previously mentioned or the halogen light source **7A** (including mutual attachment section), which has a higher amount of output light, light sources with different amounts of output light may be replaceable.

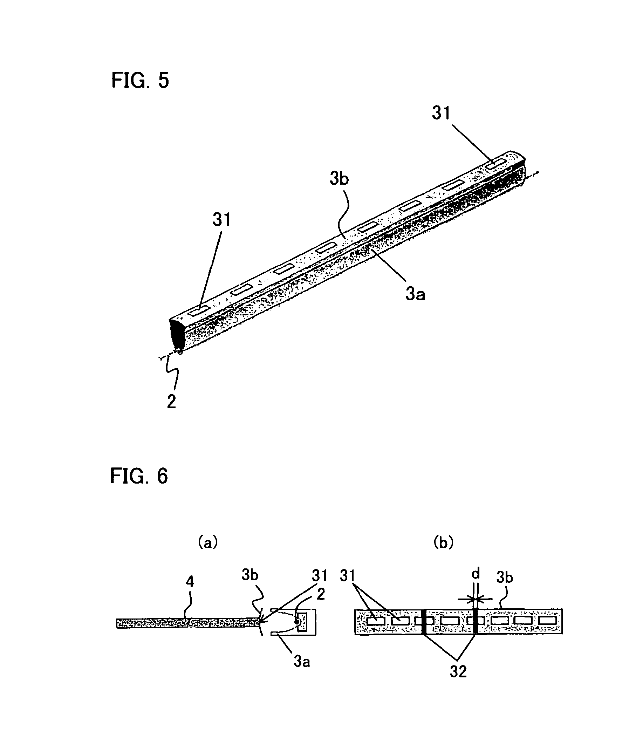

Figure **5** is a perspective view illustrating the xenon light source **2**, the reflector **3a** housing the xenon light source **2**, and the aperture plate **3b** in the front thereof in Figure **1**. Figure **6(a)** is a longitudinal cross-sectional view of the xenon light source **2**, the reflector **3a**, aperture plate **3b**, and the tapered light guiding member **4** in Figure **1**. Figure **6(b)** is a plane view illustrating the aperture section of the aperture plate **3b** in Figure **5**.

As illustrated in Figures **5**, **6(a)**, **and 6(b)**, the reflector **3a** for reflecting and gathering output light from the xenon light source **2**, and the aperture plate **3b** in the front portion thereof are provided. Aperture sections **31** are formed, separated by a predetermined interval on the aperture plate **3b**. The first light irradiation apparatus is configured such that xenon light with high directivity is taken out from the aperture section **31** to allow entry into the bottom end surface of the tapered light guiding member **4**, which is a tapered coupler.

Here, the inventors found the following: when the spectral distribution of sunlight was reproduced with high accuracy as pseudo-sunlight in order to perform a quality inspection of a solar panel, the disturbance of the spectral distribution of pseudo-sunlight irradiated onto the solar panel as the irradiation subject **13** was due to stray light with poor directivity escaping through an opening between the light source and the end surface side of the tapered light guiding member and entering an adjacent tapered light guiding member through its side surface. In order to prevent stray light from entering an adjacent tapered light guiding member through its side surface, a light shielding member is placed in between, for example, an adjacent tapered light guiding member **4** and an opening between the xenon light source **2** and the bottom end surface side of the tapered light guiding member **4**.

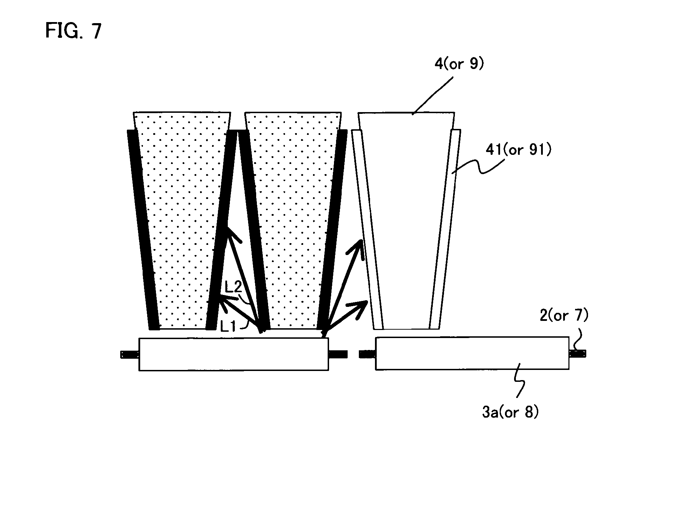

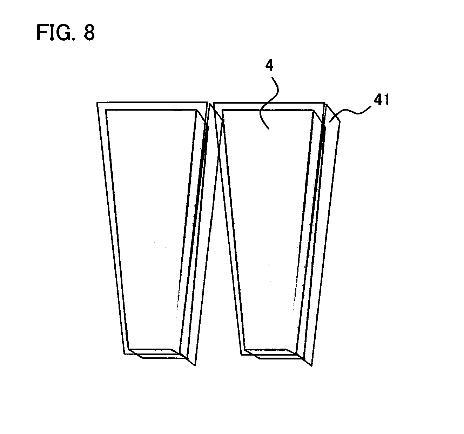

Figure **7** is a cross sectional view schematically illustrating a first structure of a tapered light guiding member for preventing stray light from entering an adjacent tapered light guiding member. Figure **8** is a perspective view schematically illustrating the first structure of the tapered light guiding member in Figure **7**. While the lamp light source **2** of a xenon lamp and the reflector **3a** in Figures **5** are provided in a plural number and all together in Figure **1**, they are configured for every adjacent two sets in the Figure **7**. The lamp light source **2** and the reflector **3a** can take various structures. Further, the first structure and the second structure can be applied to the tapered light guiding member **9** for halogen light.

In the first light irradiation apparatus **6**, a circumferential side surface of the tapered light guiding member **4**, which is a tapered coupler for increasing directivity of xenon output light, other than an upper end surface and a lower end surface, is covered with an independent light shielding member **41** as in Figures **7(a)** and **8**. Thus, even if stray lights **L1** and **L2** with poor directivity, escaping through the opening in between the bottom end surface of the tapered light guiding member **4** and the aperture section of the aperture plate **3b**, irradiate the light shielding member **41**, by surrounding the circumference (side wall) of the tapered light guiding member **4** with the light shielding member **41**, the light shielding member **41** prevents light from being taken inside the tapered light guiding member **4** through the side surface, reflecting off a wavelength selecting mirror of the light mixing section **12**, and entering the light guiding plate **14** side as stray light **L2**, as happens conventionally.

On the other hand, with regard to stray light on the side closer to the halogen light source **7**, a circumferential side surface of the tapered light guiding member **9**, which is a tapered coupler for increasing directivity of halogen output light, other than one end surface and the other end surface, may be covered with an independent light shielding member **91** as in Figures **7** and **8**. However, since halogen light is a heat ray, the temperature increases. Thus, it is better to cover the periphery as little as possible. In summary, on the side closer to the halogen light source **7**, it tends to be hot when the light shielding ratio is high. Thus, the light shielding ratio is set to be low on the side closer to the halogen light source **7**. The light shielding ratio of the light shielding member, placed in between adjacent tapered light guiding members **9** for increasing the directivity of the output light from the halogen light source **7**, is set to be lower than the light shielding ratio of the light shielding member placed in between adjacent tapered light guiding members **4** for increasing the directivity of the output light from the xenon light source 2. As a result, the increase in temperature of members due to absorption of halogen light reflected by the light shielding member can be prevented. For this reason, it is better for the reflection by the light shielding member to be as little as possible.

Next, unitization with a freely changeable irradiation area will be described.

In the pseudo-sunlight irradiation apparatus **1** according to Embodiment 1, as illustrated in Figure **1**, two groups are disposed on the left and right, each group constituted of the first light irradiation apparatus **6**, the second light irradiation apparatus **11**, and the third light irradiation apparatus **15**. Eight sets of the two groups (sixteen units) are provided in an array without space in the forward and backward direction. The group constituted of the first light irradiation apparatus **6**, the second light irradiation apparatus **11**, and the third light irradiation apparatus **15** can be unitized and manufactured with precision. The unit constituted of the first light irradiation apparatus **6**, second light irradiation apparatus **11**, and the third light irradiation apparatus **15** can be combined to be formed to the size of an irradiation surface of pseudo-sunlight matching the desired size of a solar panel. Thus, two groups, each constituted of a first light irradiation apparatus **6**, a second light irradiation apparatus **11**, and a third light irradiation apparatus **15**, disposed on the left and right are not at all limited to eight sets (16 units) in the forward and backward direction. Thereby, unitization as an optical system with freely changeable irradiation area is made possible. In this case, in the first light irradiation apparatus **6**, since xenon light source **2**, the reflector **3a** and the aperture plate **3b** are of a batch irradiation type, these are to be mutually used. The xenon light source **2**, the reflector **3a**, and the aperture plate **3b** can be provided for each tapered light guiding member **4**.

As described above, the unitization of the group constituted of the first light irradiation apparatus **6**, second light irradiation apparatus **11** and third light irradiation apparatus **15** as a unit makes it possible to suppress variation in irradiation intensity on a unit of irradiation surface and accurately obtain a desired irradiation intensity (light amount). Even when a unit of unitized irradiation surface is combined with another to form a larger irradiation surface, variation in irradiation intensity can be suppressed on a large irradiation surface as a whole to obtain desired uniform irradiation intensity (light amount). In summary, although it may be difficult to make the irradiation intensity of a large irradiation surface uniform with accuracy, the irradiation intensity (light amount) of a large irradiation surface can be accurately made uniform by dividing a large irradiation surface into a plurality of surfaces, making the irradiation intensity of each of the small irradiation surfaces uniform with accuracy, and combining the areas together.

Thus, if a unit is formed to be a group constituted of the first light irradiation apparatus **6**, the second light irradiation apparatus **11**, and the third light irradiation apparatus **15** and irradiation intensity (amount of light) for one unit is manufactured with high precision, the conventional time-intensive adjustment of irradiation intensity (amount of light) becomes unnecessary by simply assembling the units to match the size of a solar panel. Specifically, it has conventionally been necessary to measure which part of a large irradiation surface as a whole has low irradiation intensity with an irradiation intensity inspection apparatus provided with a benchmark imaging cell for each important part, and to adjust the irradiation intensity according to the size of a solar panel such that irradiation intensity of a section with low irradiation intensity is raised. However, this can be rendered unnecessary. Further, adjustment of irradiation intensity is unnecessary during periodic maintenance. If a unit of a unitized light irradiation apparatus is manufactured with precision without variation, adjustment of irradiation intensity is unnecessary and maintenance is easy. Conventionally, adjustment of irradiation intensity (adjustment of the amount of light) of the whole irradiation surface has been time-intensive.

Next, a solar panel inspection apparatus will be described, which is capable of precisely inspecting the quality of the amount of electricity generation obtained by emitting pseudo-sunlight uniformly as area irradiation onto a solar panel.

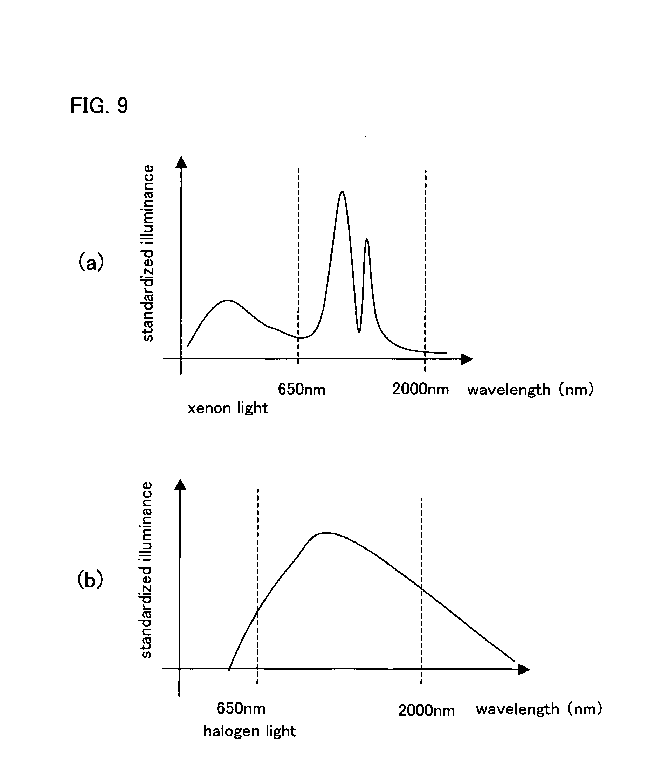

Figure **9(a)** is a chart illustrating illuminance with respect to wavelength of a xenon lamp. Figure **9(b)** is a chart illustrating illuminance with respect to wavelength of a halogen lamp.

Output light from a xenon lamp has fewer heat ray components contributing to the increase in temperature than halogen light and has spectrum of sunlight closer to the shorter wavelength side of the spectrum, as illustrated in Figure **9(a)**. Output light from a halogen lamp has many heat ray components contributing to the increase in temperature, and has spectrum of sunlight closer to the side of a longer wavelength, as illustrated in Figure **9(b)**. Pseudo-sunlight similar to sunlight can be obtained by allowing output lights of the xenon lamp and the halogen lamp to pass and to be mixed at the light mixing section **12**. The pseudo-sunlight can be guided into each light guiding member **14** and **14** from the light mixing section **12** such as a wavelength selecting mirror (or a wavelength mixing mirror), and pseudo-sunlight can be propagated to uniformly emit light with high directivity as area irradiation onto the irradiation subject **13** (solar panel).

Thereby, quality inspection of the irradiation subject **13** (such as a solar panel) is performed by inspecting whether the solar panel as the irradiation subject **13** has an amount of electricity generation greater than or equal to a benchmark with a electricity generation amount inspection apparatus. A solar panel inspection apparatus is obtained from the pseudo-sunlight irradiation apparatus **1** and the electricity generation amount inspection apparatus.

According to Embodiment 1 described above, in the pseudo-sunlight irradiation apparatus **1** irradiating pseudo-sunlight, light in the short wavelength range such as the xenon light source **2** is used and light in a wavelength range corresponding to the long wavelength range of sunlight such as the halogen light source **7** is used. Thus, an inspection can be performed for measuring an output characteristic of a solar panel with precision. In addition, in a method of light shielding the tapered light guiding members **4** and **9** when a light source not using light of a longer wavelength is used, stray light **L2** can be prevented from entering an adjacent tapered light guiding member from the side surface thereof by providing a light shielding member in between adjacent tapered light guiding members. The stray light **L2** with poor directivity escaping from the aperture section **31** of the aperture plate **3b** for guiding in xenon light source **2** can be prevented from entering the tapered light guiding section **4** for xenon light source **2**, being guided inside the light guiding member **14** and **14**, and reducing the uniformity of an irradiation surface.

### (Embodiment 2)

In Embodiment 1, the case has been described where third light irradiation apparatuses **15** are placed on the left and right, and light guiding members **14** are in contact with each other at their end surfaces. In Embodiment 2, a case will be described where light guiding members **14** on the left and right are integrated with each other so that the third light irradiation apparatuses **15** on the left and right in Embodiment 1 are also integrated with each other.

Specifically, in Embodiment 1, the case has been described where, as the pseudo-sunlight irradiation apparatus **1**, a first light irradiation apparatus **6**, a second light irradiation apparatus **11**, and a third light irradiation apparatus **15** are unitized as a set; the unitized sets are placed facing each other in the left and right direction; and a plurality of two such units, in which the other end surfaces of the respective third light guiding members **14** and **14** of the third light irradiation apparatus **15** touch each other, are placed in an array in the forward and backward direction in accordance with the size of the irradiation subject **13**. In Embodiment 2, a case will be described where as a pseudo-sunlight irradiation apparatus **1A** to be described below, a fourth light guiding member **14A** is provided in between a left-side set with a first light irradiation apparatus **6**, a second light irradiation apparatus **11** and a light mixing section **12** arranged therein; and a right-side set with a first light irradiation apparatus **6**, a second light irradiation apparatus **11** and a light mixing section **12** arranged therein, for taking mixed light from the mixing section **12** on the left side into one end surface and allowing the light to propagate through the inside thereof, and for taking mixed light from the mixing section **12** on the right side from the other end surface and allowing the light to propagate through the inside thereof, to emit light with high directivity uniformly as area irradiation from a flat surface onto an irradiation subject **13**. They are unitized as a set, and a plurality of the unitized sets are placed in an array in the forward and backward direction in accordance with the size of the irradiation subject.

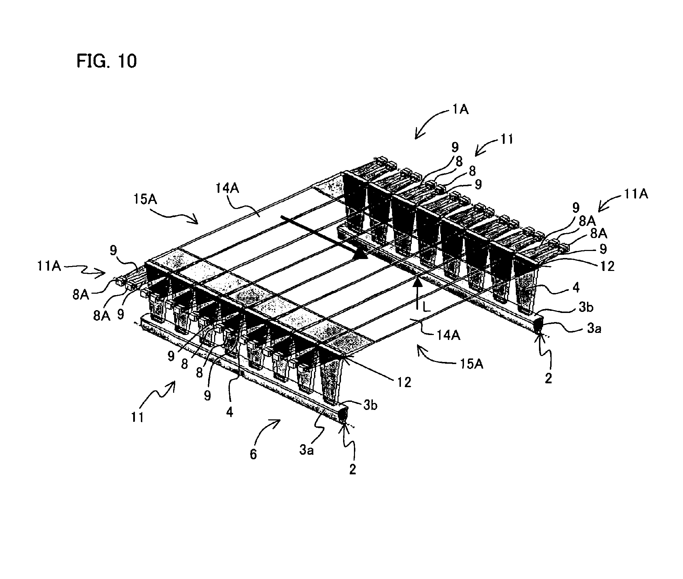

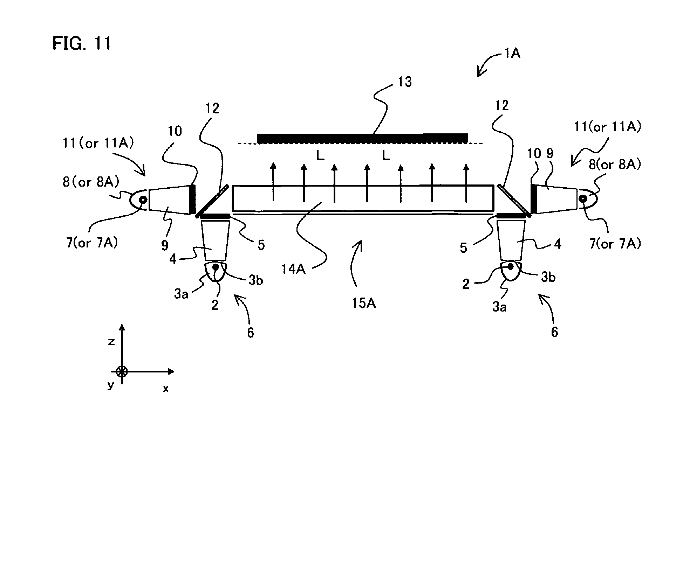

Figure **10** is a perspective view schematically illustrating a structural example of an important part of a pseudo-sunlight irradiation apparatus according to Embodiment 2 of the present invention. Figure **11** is a longitudinal cross sectional view schematically illustrating a structural example of an important part of a pseudo-sunlight irradiation apparatus in Figure **10**. Note that in Figures **10** and **11**, the same reference numerals are provided for those structural members which have the same functional effects as those in Figures **1** and **2**.

In Figures **10** and **11****,** while a pseudo-sunlight irradiation apparatus **1A** according to Embodiment 2 comprises the same configuration as the first light irradiation apparatus **6** and the second light irradiation apparatus **11** (or **11A**) in Embodiment 1, the pseudo-sunlight irradiation apparatus **1A** is different in that a first light irradiation apparatus **6** and a second light irradiation apparatus **11** (or **11A**) on the left side and a first light irradiation apparatus **6** and a second light irradiation apparatus **11** (or **11A**) on the right side are used as a unit. Further, instead of the configuration of the third light irradiation apparatus **15** in Embodiment 1, a fourth light irradiation apparatus **15A** will be used. In summary, the pseudo-sunlight irradiation apparatus **1A** according to Embodiment 2 is different from the case of the pseudo-sunlight irradiation apparatus **1** according to Embodiment 1, in that the apparatus uses the light guiding member **14A** in which the light guiding members **14** according to Embodiment 1 on the left and right are integrated with each other. Thus, the fourth light irradiation apparatus **15A**, in which two of the third light irradiation apparatuses **15** on the left and right are integrated with each other, is used.

The fourth light irradiation apparatus **15A** comprises: a mixing section **12** on the left side, such as a wavelength selecting mirror (or a wavelength mixing mirror) as a reflection and transmission means for reflecting xenon output light of a shorter wavelength from an air mass filter **5** to adjust a spectrum of a first light irradiation apparatus **6** on the left side and for transmitting halogen output light of a longer wavelength from an air mass filter **10** to adjust a spectrum of a second light irradiation apparatus **11** on the left side, to mix the light and obtain pseudo-sunlight similar to sunlight; a mixing section **12** on the right side, such as a wavelength selecting mirror (or a wavelength mixing mirror) as a reflection and transmission means for reflecting xenon output light of a shorter wavelength from an air mass filter **5** to adjust a spectrum of a first light irradiation apparatus **6** on the right side and for transmitting halogen output light of a longer wavelength from an air mass filter **10** to adjust a spectrum of a second light irradiation apparatus **11** on the right side, to mix the light and obtain pseudo-sunlight similar to sunlight; and a light guiding member **14A** for taking the pseudo-sunlight, which is diffusion light from the mixing section **12** on the left side, into one end surface and allowing the light to propagate through the inside thereof, and taking the pseudo-sunlight, which is diffusion light from the mixing section **12** on the right side, into the other end surface and allowing the light to propagate through the inside thereof, to emit light **L** with high directivity uniformly as area irradiation onto an irradiation subject **13**, such as, for example, a solar panel. In this case, in the fourth light irradiation apparatus **15A**, the light guiding member **14A** is formed in an integrated form.

The light guiding member **14A** can use light more efficiently than if the light guiding member **14A** was divided into two light guiding members **14** and **14** as in Embodiment 1 since there is no reflection of light at the end surfaces therebetween. Further, in the method for arraying the light guiding members as in Embodiment 1, when light is reflected off the other end surface, the use of a reflection mirror will have an unfavorable influence on the spectrum. On the other hand, the light guiding member **14A** does not need to be divided into two light guiding members **14** and **14** on the left and right as in Embodiment 1. Thus, there is no light adjusting necessary at the middle end surfaces, and the spectral characteristics can be maintained favorably. When the light guiding member **14A** is made of glass material, the manufacturing of the light guiding member **14A** will be more difficult as the area becomes larger. However, such glass material can be optimally applied to a light guiding member **14A** with a relatively small area.

Next, unitization with a freely changeable irradiation area will be described.

In the pseudo-sunlight irradiation apparatus **1A** according to Embodiment 2, as illustrated in Figure **10**, the first light irradiation apparatuses **6** on the left and right, the second light irradiation apparatuses **11** on the left and right, and the fourth light irradiation apparatus **15A** constitute a unit. Eight sets of the unit are provided in an array without space in the forward and backward direction in Embodiment 2. The first light irradiation apparatuses **6** on the left and right, the second light irradiation apparatuses **11** on the left and right, and the fourth light irradiation apparatus **15A** can be unitized as a unit and manufactured with precision. The unit constituted of the first light irradiation apparatuses **6** on the left and right, the second light irradiation apparatuses **11** on the left and right, and the fourth light irradiation apparatus **15A** can be combined to be formed into the size of an irradiation surface of pseudo-sunlight to match the desired size of a solar panel. Thus, the unit constituted of the first light irradiation apparatuses **6** on the left and right, the second light irradiation apparatuses **11** on the left and right, and the fourth light irradiation apparatus **15A** is not at all limited to eight sets in the forward and backward direction. Thereby, unitization with a freely changeable irradiation area is made possible. In this case, in the first light irradiation apparatus **6**, since a xenon light source **2**, a reflector **3a** and an aperture plate **3b** are of a batch irradiation type, these are to be used mutually. The xenon light source **2**, the reflector **3a**, and the aperture plate **3b** can be provided for each tapered light guiding member.

As such, unitization of the first light irradiation apparatuses **6** on the left and right, the second light irradiation apparatuses **11** on the left and right, and the fourth light irradiation apparatus **15A** as a unit makes it possible to suppress variation in irradiation intensity on a unit of an irradiation surface and accurately obtain desired irradiation intensity (light amount). Even when a unitized unit of an irradiation surface is combined with another to form a larger irradiation surface, variation in irradiation intensity can be suppressed to obtain desired uniform irradiation intensity (light amount) on a large irradiation surface as a whole. In summary, although it is difficult to make the irradiation intensity of a large irradiation surface uniform with high precision, the irradiation intensity (light amount) of a large irradiation area can be made uniform with high precision by dividing a large irradiation surface into a plurality of surfaces, and making the irradiation intensity of each of the small irradiation areas uniform with high precision, and combining the surfaces together.

Thus, if a unit is constituted of the first light irradiation apparatuses **6** on the left and right, the second light irradiation apparatuses **11** on the left and right, and the fourth light irradiation apparatus **15A** and irradiation intensity (amount of light) for one unit is manufactured with high precision, conventional time-intensive adjustment of irradiation intensity (amount of light) becomes unnecessary by simply assembling the units to match the size of a solar panel. Specifically, it has conventionally been necessary to measure which part of a whole irradiation surface, which has a large area, has low irradiation intensity with an irradiation intensity inspection apparatus provided with a benchmark imaging cell for each important part, and to adjust the irradiation intensity according to the size of a solar panel such that the irradiation intensity of section with low irradiation intensity is raised. However, this can also be rendered unnecessary.

Next, adjustment of irradiation intensity (adjustment of the amount of light) for the whole irradiation surface will be further explained.

The xenon light sources **2** and the halogen light sources 7 on both the left and right sides are matched with the respective light guiding member **14A**. Then, the amount of light output from the xenon light sources **2** and the halogen light sources **7** on both the left and right sides can be controlled to control the amount of light output from the light guiding member **14A** individually with precision by replacing the lamp of the xenon light source **2** and the halogen light source **7** or adjusting the current flowing through the lamp. Similarly, the air mass filters **5** and the air mass filters **10** on both the left and right sides are matched with the respective light guiding member **14A**. Then, the amount of light entering the integrated light guiding member **14A** can be controlled to control the amount of light output to the integrated light guiding plate **14A** individually with precision by replacing the air mass filter **5** and the air mass filter **10** on both the left and right sides with an air mass filter having a different light transmittance.

The xenon light sources **2** and the halogen light sources **7** on both the left and right sides are matched with the respective light guiding member **14A**, and the air mass filters **5** and the air mass filters **10** on both the left and the right sides are matched with the respective light guiding member **14A**. Thus, precise adjustment of illuminance is made possible for the irradiation surface of the irradiation subject **13**, without the adjustment time for irradiation of the irradiation surface being time-intensive in comparison to the conventional configuration where output light from the lamp light source is adjusted with numerous mirrors to adjust the illuminance irradiating the irradiation subject uniformly on the whole surface. Thus, uniform illuminance can be obtained for the irradiation surface of the irradiation subject **13**.

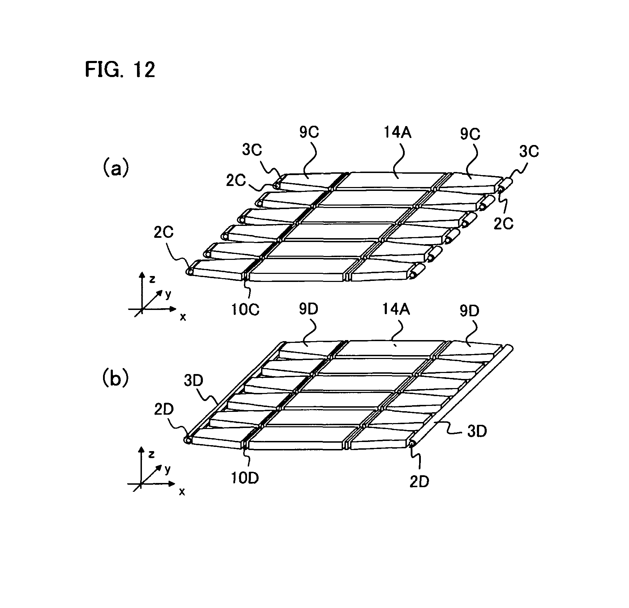

Next, adjustment of the amount of light can be further simplified when: either one of the first light irradiation apparatus **6** and the second light irradiation apparatus **11** is used, or another light irradiation apparatus is used to match the lamp light sources on both the left and right sides with the respective light guiding member **14A**; and the air mass filters on both the left and right sides are matched with the respective light guiding member **14A**, since there is only one light irradiation apparatus. This is illustrated in Figures **12(a)** and **12(b)**.

As illustrated in Figure **12(a)**, the amount of light output from light source lamps **2C** on both left and right sides can be controlled individually by matching the light guiding plate **14A** with the respective light source lamps **2C** on both the left and right sides, and replacing the lamp and/or adjusting the current. In this case, amount of light allowed to enter the light guiding plate **14A** can be adjusted by replacing an air mass filter **10C** (spectrum adjusting filter) with one having different light transmittance.

Also, as illustrated in Figure **12(b)**, for the light guiding plate **14A**, a light source lamp is to be a non-divided batch irradiation type such as light source lamp **2D**, and each light guiding plate **14** is matched with respective air mass filters **10D** on both the left and right sides. Then, transmittance for each filter on both the left and right sides may be controlled individually by replacing only the air mass filter **10D** (spectrum adjusting filter) on both the left and right sides. Alternatively, amount of light allowed to enter the light guiding plate **14A** from both sides can be restrained and adjusted by adding a light transmittance filter aside from the air mass filters **10D** (spectrum adjusting filters) on both the left and right sides, as correction filter for controlling transmittance.

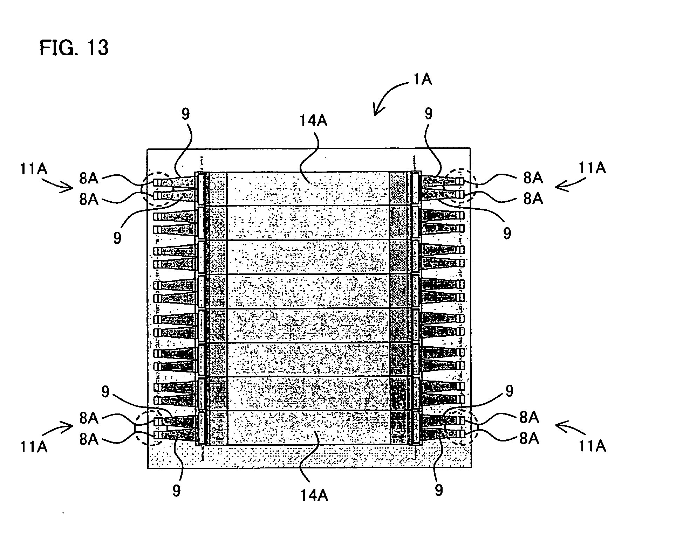

In addition, as a detailed example of adjustment of the amount of light, a case will be further described where the amount of light at area closer to both edges in a plane view is increased to make the amount of irradiation light uniform on a whole irradiation surface. This can be applied in the case of Figures **13(a)** and **13(b)** where either the first light irradiation apparatus **6**, the second light irradiation apparatus **11**, or another light irradiation apparatus is used. However, a case of the pseudo-sunlight irradiation apparatus **1** in Figure **1** is described herein.

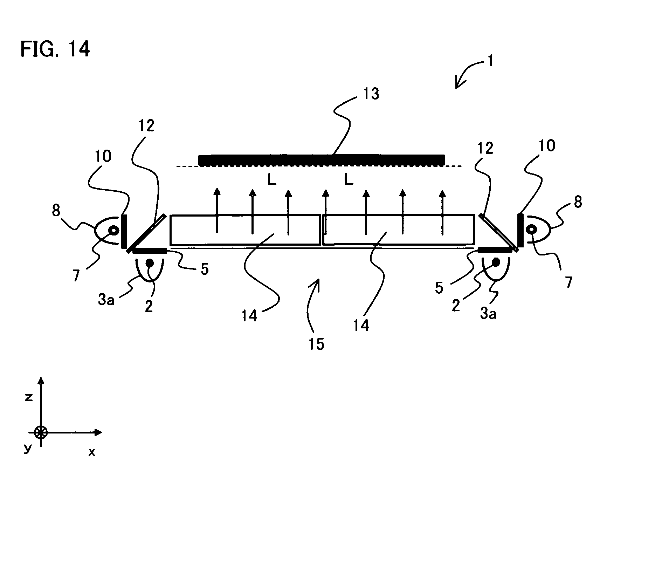

Figure **14** is a plane view of a pseudo-sunlight irradiation apparatus **1A** in Figure **10**.

A group constituted of the first light irradiation apparatuses **6** on the left and right sides, the second light irradiation apparatuses **11** on the left and right, and the fourth light irradiation apparatus **15A** in the middle forms a unit, and eight sets of units are provided in the forward and backward direction. Since there tends to be less irradiation light at either edge in the forward and backward direction (nearest side and the furthest side), similarly to the case of the plane view in Figure **4**, as illustrated in the plane view in Figure **14**, the amount of irradiation light at the area closer to either edge is increased compared to the amount of irradiation light at the center section, which is the section other than the area close to either edge, so as to make the amount of irradiation light to the irradiation subject **13** uniform. Herein, the amount of xenon light and halogen light are both increased, but only halogen light is described. Both edges in the forward and backward direction are designed to enable the use of a halogen light source **7A** having a slightly larger output compared to the halogen light source **7**.

The pseudo-sunlight irradiation apparatus **1A** is equipped with two of second light irradiation apparatuses **11A** on the left and right at the area close to both edges in the forward and backward direction. The second light irradiation apparatus **11A** comprises: a halogen light source **7A** having a higher amount of light output than the halogen light source **7**; a reflector **8A** for housing the halogen light source **7A**, with an inner surface functioning as a reflection surface; a tapered light guiding member **9** for taking halogen output light reflected by the inner surface of the reflector **8A**, into one end surface of the tapered light guiding member **9** and propagating the light through the inside to improve the directivity of the light; and an air mass filter **10** functioning as a second optical filter for filtering the halogen output light from the other end surface of the tapered light guiding member **9** to form a spectrum of pseudo-sunlight closer to the side longer wavelength side of the spectrum. In this case, the reflector **8A**, the tapered light guiding member **9**, and the air mass filter **10** are to be compatible with the amount of light output of the halogen light source **7A**. If the reflector **8** is compatible with the amount of light output, the reflector **8** may be the same as reflector **8A**.

In addition, in the pseudo-sunlight irradiation apparatus **1A** according to Embodiment 2, the second light irradiation apparatuses **11** on the left and right and the fourth light irradiation apparatus **15A** are unitized, and eight such units are provided in an array in the forward and backward direction. At least the unit can comprise a replaceable lamp with a different amount of light output or a replaceable air mass filter **5** (spectral adjusting filter) with a different light transmittance, so that irradiation intensity (light amount) of light entering the light guiding plate **14A** can be individually adjusted. By providing an attachment section for the halogen light source **7** previously mentioned and the halogen light source **7A**, which has a higher amount of light output, light sources with different amounts of light output may be replaced.

According to Embodiments 1 and 2 described above, since at least one light source (xenon light source **2**, halogen light source **7**, or the like) and an optical filter (air mass filter **5**, **10**, or the like) functioning as an optical element are matched with the respective light guiding member **14** or **14A**, and the irradiation region of the light guiding member **14** or **14A** for surface irradiation is matched with a respective part of an irradiation surface (small irradiation surface) of the irradiation subject **13**, adjustment of illuminance of the part of an irradiation surface (small irradiation surface) of the irradiation subject **13** can be performed with precision by changing the amount of light entering the light guiding member **14** or **14A** for surface irradiation. Specifically, adjustment of illuminance of a part of an irradiation surface (small irradiation surface) of the irradiation subject **13** can be performed with precision by adjusting the output for each lamp functioning as a light source, or changing the air filter to one with a different transmittance as an optical filter. Further, a decrease in illuminance at the edge section of an irradiation region among the irradiation surface of the irradiation subject **13** can be prevented by raising the light source output corresponding to the light guiding member **14** or **14A** for surface irradiation at both ends in the forward and backward direction. Thus, even when the irradiation surface of the irradiation subject **13** becomes expansive, precise and uniform illuminance for the irradiation surface of the irradiation subject **13** can be quickly obtained without the conventional time-intensive adjustment of illuminance of the irradiation surface of the irradiation subject **13**.

Also, with the pattern (scatterer) of light guiding member **14** or **14A**, where pseudo-sunlight allowed to enter is obtained by adjusting spectrum of xenon light and halogen light and mixing the xenon light and the halogen light, light having uniform illuminance can be irradiated from the light guiding member **14** or **14A**. Since an irradiation surface irradiating a solar panel as the irradiation subject **13** is assumed to be divided in multiple pieces, and each light guiding member **14** or **14A** is arranged to correspond to the divided small irradiation surface, by adjusting only the amount of irradiation light of the small irradiation surface for each light guiding member **14** or **14A**, unification of illuminance of the whole surface of the plurality of small irradiation surfaces can be realized easily and reliably. If the solar panel has a large area, by arranging a plurality of optical systems to match the size of the solar panel, even if the area is large, irradiation light with uniform illuminance can be produced easily, reliably, and quickly. Further, even if there is an irregularity in illuminance for a single lamp due to individual difference of a lamp at the time of lamp replacement, uniform irradiation light can be obtained by simply adjusting the amount of light for each unitized optical system. Thus, readjustment is unnecessary.

Although not specifically described in Embodiments 1 and 2, a scatterer (pattern) is printed on the light guiding member **14** and **14A**. Light entering the light guiding member **14** and **14A** is scattered by the scatterer to emit light uniformly as area irradiation onto a solar panel as the irradiation subject **13**. The scatterer (pattern) of the light guiding member **14** and **14A** is printed having a pattern such that the illuminance becomes uniform on the whole irradiation surface. When illuminance irregularity arises on the left and right on the irradiation surface placed on a solar panel, by adjusting the amount of light output for each unitized light source optical system on the left and right (one unit), illuminance irregularity can be easily and reliably reduced. If the light guiding members **14** and **14** of the light source optical system on the left and right are integrated as the light guiding member **14A**, when illuminance irregularity arises on the irradiation surface, irradiation light from the light guiding member **14A** of the integrated light source optical system is irradiated on the whole irradiation surface. Thus, partial adjustment of illuminance on the irradiation surface using only adjustment of the amount of light is more difficult in comparison to the light guiding members **14** and **14** of the light source optical system on the left and right. In addition, when the light guiding members **14** and **14** on the left and right are integrated as the light guiding member **14A**, it becomes necessary for a printed pattern of a scatterer to produce uniform light in an expansive area and further uniform light is irradiated even when light enters from both edges of the light guiding member. Thus, it is necessary that integration of the light guiding members **14** and **14** on the left and right be performed for an irradiation area to the extent where production of uniform light is not impeded. Adjustment of illuminance irregularity on the irradiation surface is easier with light guiding members **14** and **14** on the left and right than with the integrated light guiding member. Further, when a solar panel is enlarged, uniform light in an expansive area is produced by simply arranging numerous optical systems of the present invention. Additionally, adjustment to make illuminance on the irradiation surface uniform becomes possible, even for an expansive area, by simply adjusting the amount of irradiation light from the light source optical system of each optical system.

Further, in order to prevent stray light from entering the adjacent tapered light guiding members **4** or **9** through a side surface thereof, a light shielding member is disposed, for example, between an opening in between the xenon light source **2** and the side closer to the bottom end surface of the tapered light guiding member **4**; and the adjacent tapered light guiding member **4**. For example, as illustrated in Figure **7**, even if stray lights **L1** and **L2** with poor directivity, escaping through the opening in between the bottom end surface of the tapered light guiding member **4** and the aperture section of the aperture plate **3b**, irradiate the light shielding member **41**, by surrounding the circumference (side wall) of the tapered light guiding member **4** with the light shielding member **41**, the light shielding member **41** prevents light from being taken inside the tapered light guiding member **4** from the side surface, reflecting off a wavelength selecting mirror of the light mixing section **12**, and entering a light guiding plate **14** side as stray light **L2**, as happens conventionally. Thereby, uniformity of illuminance at the irradiation surface is increased.

Although not particularly described in Embodiment 1, in the pseudo-sunlight irradiation apparatus **1**, a plurality of optical systems are disposed, which comprises at least one light source with a different light emission wavelength range (xenon lamp **2,** halogen lamp **7,** a lamp other than the xenon lamp **2** and the halogen lamp **7**); an optical filter (air mass filter **5,** air mass filter **10,** air mass filter other than the air mass filter **5** and the air mass filter **10**) functioning as an optical element providing a predetermined spectral distribution to output light from the at least one light source; a light guiding member **14** or **14A** for propagating output light obtained through the optical element to emit the light as area irradiation onto an irradiation subject. Also, at least one light source and the optical element are matched with the respective light guiding member **14** or **14A.** Further, the amount of light entering the light guiding member **14** or **14A** can be adjusted individually for each optical system by adjusting at least either the at least one light source or the optical element. Thereby, light is irradiated on the whole irradiation surface of the irradiation subject **13** by each light guiding members **14** or **14A** of a plurality of optical systems. Thereby, an objective of the present invention is achieved, in which precise uniform illuminance can be obtained for an irradiation surface without time-intensive adjustment of the illuminance of the irradiation surface, even for an expansive irradiation surface.

In Embodiment 1, a case has been described, as illustrated in Figure **2**, where the optical system comprises: the first light irradiation apparatus **6** having a first light source (xenon lamp **2**), a first light guiding member for taking output light from the first light source into one end surface and outputting light with improved directivity from the other end surface (tapered light guiding member **4**), and a first optical filter for adjusting the spectrum of light output from the other end surface of the first light guiding member (air mass filter **5**) ; a second light irradiation apparatus **11** having a second light source (halogen lamp **7**), a second light guiding member for taking output light from the second light source into one end surface and outputting light with improved directivity from the other end surface (tapered light guiding member **9**), and a second optical filter for adjusting the spectrum of light output from the other end surface of the second light guiding member; and a third light irradiation apparatus **15** having a light mixing member **12** for obtaining pseudo-sunlight similar to sunlight by mixing light from the first light irradiation apparatus **6** and light from the second light irradiation apparatus **11**, and a third light guiding member for taking pseudo-sunlight from the light mixing member **12** into one end surface, propagating the light through the inside thereof, to emit light with high directivity as area irradiation onto the irradiation subject **13** uniformly from a planar surface (light guiding member **14**). The structure is not limited to this. As illustrated in Figure **14**, the optical system may comprise: a first light irradiation apparatus **6** having a first light source (xenon lamp **2**), and a first optical filter functioning as the optical element for adjusting the spectrum of light output from the first light source (air mass filter **5**); a second light irradiation apparatus **11** having a second light source (halogen lamp **7**), and a second optical filter functioning as the optical element for adjusting the spectrum of light output from the second light source (air mass filter **10**); and a third light guiding member **15** having a light mixing member **12** for obtaining pseudo-sunlight similar to sunlight by mixing light from the first light irradiation apparatus **6** and light from the second light irradiation apparatus **11**; and a third light guiding member **14** for taking pseudo-sunlight from the light mixing member **12** into one end surface, and propagating the light through the inside thereof, to emit light with high directivity onto the irradiation subject **13** uniformly from a flat surface. In this structure, in comparison to the case in Embodiment 1, difference is only that the first light guiding member (tapered light guiding member **4**) and the second light guiding member (tapered light guiding member **9**) are not present.

In Embodiment 1, a unit is constituted of the first light irradiation apparatus **6**, the second light irradiation apparatus **11** and the third light irradiation apparatus **15**. The units are placed facing each other in the left and right direction. A plurality of two units, where the other end surfaces of the respective third light guiding members (light guiding members **14**) of the third light irradiation apparatus **15** touch each other, are placed in an array in the forward and backward direction in accordance with the size of the irradiation subject **13**. On the other hand, in Embodiment 2, in between a left-side set with the first light irradiation apparatus **6**, the second light irradiation apparatus **11** and the light mixing section **12** arranged therein and a right-side set with the first light irradiation apparatus **6**, the second light irradiation apparatus **11** and the light mixing section **12** arranged therein, the fourth light guiding member (light guiding member **14A**) is provided, for taking mixed light from the mixing section **12** on the left side into one end surface and allowing the light to propagate the inside thereof, and for taking mixed light from the mixing section **12** on the right side into the other end surface and allowing the light to propagate through the inside thereof, to emit light with high directivity uniformly as area irradiation from a flat surface onto an irradiation subject **13**. These constitute a unit, and a plurality of units are placed in an array in the forward and backward direction in accordance with the size of the irradiation subject **13**.

Next, the optical system may comprise: a light irradiation apparatus having a first light source (xenon lamp **2**, halogen lamp **7**, or another lamp), a light guiding member for taking output light from the first light source into one end surface and outputting the light with improved directivity from the other end surface (tapered light guiding member **4**, tapered light guiding member **9**, or another tapered light guiding member), and an optical filter for adjusting the spectrum of light output from the other end surface of the light guiding member (air mass filter **5**, air mass filter **10**, or air mass filter other than the air mass filter **5** and the air mass filter **10**); and a light guiding member **14** or **14a** for surface irradiation for taking pseudo-sunlight similar to sunlight from the light irradiation apparatus into one end surface and propagating the light through the inside to emit light with high directivity as area irradiation uniformly onto the irradiation subject **13** from a flat surface. The light guiding member (tapered light guiding member **4**, tapered light guiding member **9**, or another tapered light guiding member) may not be used. Specifically, the optical system may comprise: an optical irradiation apparatus having a first light source (xenon lamp **2**, halogen lamp **7**, or another lamp), and an optical filter functioning as an optical element for adjusting the spectrum of light output from the first light source; and a light guiding member for surface irradiation for taking pseudo-sunlight similar to sunlight from the light irradiation apparatus into one end surface, and propagating the light through the inside thereof, to emit light with high directivity as area irradiation uniformly onto the irradiation subject from a flat surface.

Similarly to Embodiment 1, a unit is constituted of an optical system having the light irradiation apparatus and the light guiding member for surface irradiation in the case described above, as previously mentioned. The units are placed facing each other in the left and right direction. A plurality of two units, where the other end surfaces of the respective light guiding members for surface irradiation touch each other, are placed in an array in the forward and backward direction in accordance with the size of the irradiation subject **13**. Also, similarly to Embodiment 2, the light irradiation apparatuses are placed on the left and right. The light guiding member **14** or **14A** is provided for taking light from the optical filter on the left side into one end surface and allowing the light to propagate the inside thereof, and for taking light from the optical filter on the right side into the other end surface and allowing the light to propagate the inside thereof, to emit light with high directivity uniformly as area irradiation from a flat surface onto an irradiation subject **13**. This constitutes a unit, and a plurality of units are placed in an array in the forward and backward direction in accordance with the size of the irradiation subject **13**.

Although not particularly described in Embodiment 2, similarly to the case of Embodiment 1, when the balance of the amount of output light from the light guiding member **14A** for area irradiation is adjusted, it is possible to only change the amount of light independently of the conditions of an optical system in the middle for allowing the light to enter the light guiding members **14A** through both sides. Specifically, even after the spectral distribution of pseudo-sunlight is fixed, the amount of output light from the light guiding member **14A** can be adjusted without changing the spectral distribution of pseudo-sunlight.

In Embodiments 1 and 2, a plurality of sets constituted of the first light irradiation apparatus **6**, the second light irradiation apparatus **11**, and the third light irradiation apparatus **15** or **15A** are provided. The first tapered light guiding members **4** are each disposed adjacent to teach other and the second tapered light guiding members **9** are each disposed adjacent to each other. The light shielding member is provided between adjacent first tapered light guiding members and/or adjacent second tapered light guiding members 9**.**

Although not particularly described in Embodiments 1 or 2, the air mass filter **5** functioning as a first optical filter is constituted of a plurality of filters for adjusting the spectrum of the xenon light source **2,** and one of the filters is a reflection mirror that reflects only near infrared light, and further, a light shielding member **41** or **42** is placed to cover surfaces other than the surfaces which allow light to enter or exit, of the tapered light guiding member **4** that increases the directivity of the output light from the xenon light source **2**. Thereby, stray light due to the near infrared light reflection light can be prevented.

As described above, the present invention is exemplified by the use of its preferred Embodiments 1 and 2. However, the present invention should not be interpreted solely based on Embodiments 1 and 2 described above. It is understood that the scope of the present invention should be interpreted solely based on the claims. It is also understood that those skilled in the art can implement an equivalent scope of technology, based on the description of the present invention and common knowledge from the detailed description of the preferred Embodiments 1 and 2 of the present invention. Furthermore, it is understood that any patent, any patent application, and any references cited in the present specification should be incorporated by reference in the present specification in the same manner as the contents are specifically described therein.

### INDUSTRIAL APPLICABILITY

The present invention can be applied in the field of: a pseudo-sunlight irradiation apparatus for emitting pseudo-sunlight with high directivity onto an irradiation subject, and a solar panel inspection apparatus for measuring an output characteristic of a solar panel to determine quality, using the pseudo-sunlight irradiation apparatus. According to the present invention as described above, irradiation light of uniform illuminance can be easily and reliably irradiated onto a whole irradiation surface, even when an irradiation subject is expansive, and even when exchanging a lamp.

## Claims

1. A pseudo-sunlight irradiation apparatus, wherein a plurality of optical systems are disposed, each optical system comprising:
at least one light source each having a different light emission wavelength range, an optical element providing a predetermined spectral distribution to output light from each of the at least one light source, and a light guiding member for propagating output light obtained through the optical element to emit light as area irradiation onto a part of an irradiation subject, wherein
the at least one light source and the optical element are matched with a respective light guiding member, the amount of light entering the light guiding member is adjustable individually for each of the optical systems by adjusting at least either the at least one light source or the optical element, and light is irradiated on the whole irradiation surface of the irradiation subject by the light guiding members of the plurality of optical systems.

2. A pseudo-sunlight irradiation apparatus according to claim 1, wherein each optical system comprises:
a light irradiation apparatus having a first light source, and an optical filter functioning as the optical element for adjusting a spectrum of light output from the first light source; and
a light guiding member for surface irradiation, for taking pseudo-sunlight similar to sunlight from the light irradiation apparatus into one end surface and propagating the light through the inside thereof, to emit the light as area irradiation uniformly onto an irradiation subject from a flat surface.

3. A pseudo-sunlight irradiation apparatus according to claim 1, wherein each optical system comprises:
a light irradiation apparatus comprising: a first light source; a light guiding member for taking output light from the first light source into one end surface and outputting light with improved directivity from the other end surface thereof; and an optical filter for adjusting a spectrum of light output from the other end surface of the light guiding member; and
a light guiding member for surface irradiation, for taking pseudo-sunlight similar to sunlight from the light irradiation apparatus into one end surface and propagating the light inside thereof, to emit the light with improved directivity as area irradiation uniformly onto an irradiation subject from a flat surface.

4. A pseudo-sunlight irradiation apparatus according to claim 2 or 3, wherein a unit is constituted of the optical system comprising the light irradiation apparatus and the light guiding member for surface irradiation, the units are placed facing each other in the left and right direction, and a plurality of two units, having the other end surfaces of the respective light guiding members for surface irradiation touch each other, are placed in an array in the forward and backward direction in accordance with the size of the irradiation subject.

5. A pseudo-sunlight irradiation apparatus according to claim 2 or 3, wherein the light irradiation apparatuses are placed on the left and right, a light guiding member for surface irradiation is provided for taking light from the optical filter on the left side into one end surface and allowing the light to propagate through the inside thereof, and for taking light from the optical filter on the right side into the other end surface and allowing the light to propagate through the inside thereof, to emit light with high directivity uniformly as area irradiation onto an irradiation subject from a flat surface, a unit is constituted of the light guiding member, and a plurality of the units are provided in an array in the forward and backward direction in accordance with the size of an irradiation target.

6. A pseudo-sunlight irradiation apparatus according to claim 1, wherein each optical system comprises:
a first light irradiation apparatus comprising: a first light source; and a first optical filter functioning as the optical element, for adjusting a spectrum of the light output from the first light source;
a second light irradiation apparatus comprising: a second light source; and a second optical filter, functioning as the optical element, for adjusting a spectrum of the light output from the second light source; and
a third light irradiation apparatus comprising: a light mixing member for mixing light from the first light irradiation apparatus and light from the second light irradiation apparatus to obtain pseudo-sunlight similar to sunlight; and a third light guiding member for taking the pseudo-sunlight from the light mixing member, into one end surface, allowing the pseudo-sunlight to propagate the inside thereof and emitting light with high directivity onto an irradiation subject from a flat surface thereof uniformly as area irradiation.

7. A pseudo-sunlight irradiation apparatus according to claim 1, wherein each optical system comprises:
a first light irradiation apparatus comprising: a first light source; a first light guiding member for taking output light from the first light source into one end surface and outputting the light with increased directivity from another end surface; and a first optical filter for adjusting a spectrum of the light output from the other end surface of the first light guiding member;
a second light irradiation apparatus comprising: a second light source; a second light guiding member for taking output light from the second light source into one end surface and outputting the light with increased directivity from the other end surface; and a second optical filter for adjusting a spectrum of the light output from the other end surface of the second light guiding member; and
a third light irradiation apparatus comprising: a light mixing member for mixing light from the first light irradiation apparatus and light from the second light irradiation apparatus to obtain pseudo-sunlight similar to sunlight; and a third light guiding member for taking the pseudo-sunlight from the light mixing member, into one end surface, allowing the pseudo-sunlight to propagate the inside thereof and emitting light with high directivity onto an irradiation subject from a flat surface thereof uniformly as area irradiation.

8. A pseudo-sunlight irradiation apparatus according to claim 6 or 7, wherein a unit is constituted of the optical system comprising the first light irradiation apparatus, the second light irradiation apparatus, and the third light irradiation apparatus; and wherein a plurality of groups of two units are placed in an array in the forward and backward direction in accordance with the size of the irradiation subject, the units of each of said groups placed facing each other in the left and right direction and having the other end surfaces of the respective third light guiding members of the third light irradiation apparatus touching each other.

9. A pseudo-sunlight irradiation apparatus according to claim 6 or 7, wherein in between a left-side set with a first light irradiation apparatus, a second light irradiation apparatus and the light mixing section arranged therein; and a right-side set with the first light irradiation apparatus, the second light irradiation apparatus and the light mixing section arranged therein, a fourth light guiding member is provided in place of the third light irradiation apparatus, for taking mixed light from the light mixing section on the left side into one end surface and allowing the light to propagate through the inside thereof, and for taking mixed light from the light mixing section on the right side into the other end surface and allowing the light to propagate through the inside thereof, to emit light with high directivity uniformly as area irradiation onto an irradiation subject from a flat surface in accordance with the size of an irradiation subject.

10. A solar panel inspection apparatus for measuring an output characteristic of a solar panel to determine quality, using the pseudo-sunlight irradiation apparatus according to any of claims 1 to 3, 6, and 7.
